# EUROPEAN PATENT APPLICATION

(11) **EP 1 630 139 A1**
(43) Date of publication of application: **01.03.2006**
(21) Application number: 04077415.0
(22) Date of filing: 23.08.2004
(51) Int. Cl.: C02F 3/30

(54) **Process for the biological denitrification of ammonium containing wastewater**

(71) Applicant: Amecon Environmental Consultancy, 2623 EW Delft (NL)
(72) Inventor: Mulder, Arnold, 2614 GK Delft (NL)
(74) Representative: Winckels, Johannes Hubertus F.

(57) **Abstract**

The invention is directed to a process for biological denitrification of waste water, comprising a nitrifying reactor (2) and a denitrifying reactor (3), wherein an ammonium ion containing waste water stream is partly fed to the denitrifying reactor (3) and partly to the nitrifying reactor (2), in which process the ammonium ion is at least partly biologically nitrified in the nitrifying reactor to nitrite and/or nitrate, which nitrified waste water flow is subsequently fed to the denitrifying reactor.

## Description

The invention is in the area of waste water treatment and more in particular in the area of denitrifying ammonium oxidation.

In WO-A 8907089 a process of this kind is described, wherein the ammonium ion is used as an electron donor in the denitrification of waste water. In this process the ammonium ion and the nitrate are simultaneously fed to a fluidized bed reactor and reacted therein. The said application is specifically directed to specific micro-organisms that are suitable for this process.

This process is also known as the Anammox process, or the anammox-pathway.

The reactor in said process is fed with effluent from an anaerobic reactor treating diluted yeast wastewater and the nitrate is supplied from an external sodium nitrate solution. Afterwards fundamental research at the Technical University of Delft disclosed that in this process ammonium is oxidized with nitrite in stead of nitrate.

Since then most applications of the Anammox process are focused on feeding the Anammox reactor with nitrite produced in an aerobic nitritification system (e.g. the Sharon- Anammox-process developed by TUD; WO-A 9807664)). Since its discovery the Anammox bacteria have been found on many locations in nature.

In the Sharon-Anammox process the Sharon reactor, where nitrite is produced by suspended growing biomass, is placed prior to the Anammox reactor. The feeding of the suspended growing biomass from the Sharon reactor (which is essential for this process) into the Anammox reactor may interfere with an appropriate biofilm formation in the Anammox reactor. It has been found that non-attaching microbes are able to hydrolyze the attachment polymers of attaching microbes. This means that this two stage system is characterized by a potential intrinsic instability with respect to attached growing microbes.

High nitrite levels as produced in the Sharon are known to be toxic, directly or through the formation of NO for microbes. This affects the performance of the Anammox process negatively.

These negative aspects show that there is a need for a more appropriate configuration with the Anammox process. It was unexpectedly found that the given shortcomings can be solved by the present invention.

The invention is based on the surprising discovery, that the these and other advantages could be overcome by feeding part of the ammonium ion containing waste water directly into the denitrifying reactor, and the remaining part to the nitrifying reactor.

Accordingly the invention concerns a process for biological denitrification of waste water, comprising a nitrifying reactor and a denitrifying reactor, wherein an ammonium ion containing waste water stream is partly fed to the denitrifying reactor and partly to the nitrifying reactor, in which process the ammonium ion is at least partly biologically nitrified in the nitrifying reactor to nitrite and/or nitrate, which nitrified waste water flow is subsequently fed to the denitrifying reactor.

Surprisingly it has been found that with this process the disadvantages of the prior art are overcome, whereas further no complex process control is required for the production of nitrite in a reactor prior the reactor with the denitrifying process. Also the denitrifying conditions in the denitrifying reactor will enhance the growth of granules which will stimulate the development of the denitrifying process.

Further it is an advantage that there are no high nitrite levels which may be toxic, reactive and result in the unwanted emission of volatile nitrogen oxides (N₂O, NO, NO₂) which are greenhouse gasses.

An added advantage resides therein that the first reactor can be made substantially smaller that the Sharon reactor of the prior art, as the flow through the reactor is only part of the total flow.

The most relevant conversions in the nitrogen removal process of the invention are given below. The ammonium in the water stream passing the nitrifying system will be nitrified according to the conventional nitrification reactions (1) and (2).

NH_{4⁺} + 1.5O₂ → NO_{2⁺} + H₂O + 2H⁺ (1)

NO_{2⁻} + 0.5O₂ → NO_{3⁻} (2)

In the process of the invention it is possible to produce nitrite and/or nitrate in the first, nitrifying, reaction step. In a preferred embodiment the reaction goes mainly to nitrate, although in another embodiment it is also possible to produce mainly nitrite. Although this has the advantage of an easier control of the denitrifying reaction step, the first reaction step is more difficult, as indicated above.

Full nitrification is not required, some nitrite in the effluent (about 5-20% of the influent ammonium concentration) is even recommended. Preferably 80 to 95 % of the ammonium oxidation products are nitrate, the remainder being mainly nitrite.

The required nitrite for the ammonium oxidation is produced mainly under denitrifying conditions in the denitrifying reactor from nitrate.

The nitrate produced in the nitrifying system will be reduced to nitrite according to reaction (3) in which [H] stands for the reduction equivalents originating from sulfide or organic components. This reduction mainly takes place in the denitrifying reactor.

The nitrite produced will then be used by the anammox bacteria to oxidize ammonium, which is let directly into the denitrifying reactor, according to reaction (4). The induction of nitrite may also proceed through the oxidation of manganese into manganese oxide (Vandenabeele, J. et al, (1995). Influence of nitrate on manganese removing microbial consortia from sand filters. Wat. Res. 29, 579-587). Manganese compounds may be present in the effluent of a methane reactor. Also the presence of sulfides or carboxylic acids lead to nitrite formation from nitrate.

NO_{3⁻} + 2[H] → NO_{2⁻} + H₂O (3)

NH_{4⁻} + NO_{2⁻} → N₂ + H₂O (4)

The direct flow of ammonia containing effluent into the nitrifying reactor will result in decrease of potential methane emission.

The denitrification reactor is partially fed directly with the ammonium ion containing effluent, for example an anaerobic effluent, such as from a methanogenic pre-treatment. The distribution ratio between the nitrifying and the denitrifying reactor is determined by the composition of the wastewater in especially by the concentration of the individual electron donors (sulfide, organic compounds and ammonium) in comparison with the amount of ammonium ion.

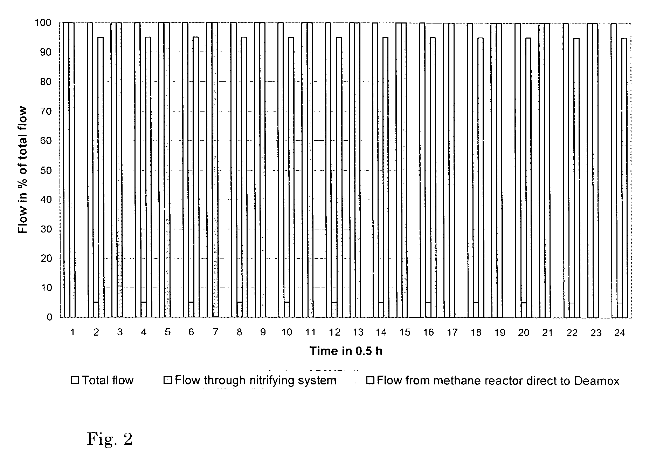

The nitrite production in the denitrifying reactor is preferably controlled and stimulated by a characteristic feeding pattern based on a discontinuous loaded substrate gradient (DLG). The discontinuous loaded gradient may be realized by two modes. First in the denitrifying reactor there is a separate inlet for the effluent and the outlet of the nitrification process. The separate inlet will result in a substrate gradient in the reactor. Secondly the partition of the total flow (from the methanogenic reactor) over the nitrification reactor and the direct flow into the reactor is alternating (Figure 2). This operating mode surprisingly results in a good process performance. The actual feeding pattern in the Sharon-Anammox process is based on a continuous flow. However for the process of the present invention it is possible to use the DLG only during start-up.

The process of the invention may be based on any biological nitrification and denitrification system using micro-organisms, such as suspended sludge systems and is preferably based on systems using a biofilm in granules (e.g. EGSB or UASB) or on a supporting matrix (filter or fluidized bed systems). The ammonium oxidation under denitrifying conditions is operates optimal by a consortium of microbes in a biofilm where the intermediate nitrite concentration is kept low.

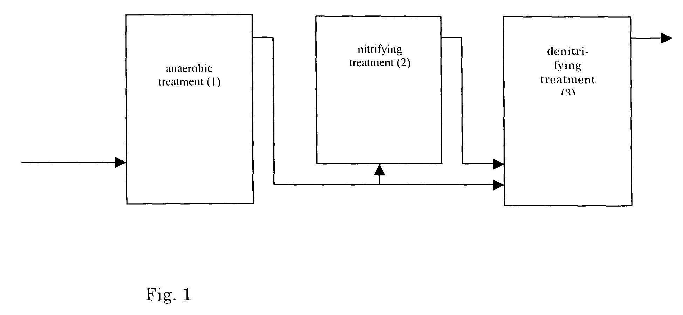

A typical flow diagram with the process of the invention is given in Figure 1. In the methane treatment (1) biodegradable organic components are largely removed and the effluent contains only residual organic components and sulfide (when the influent contains sulfate). The effluent of the methane reactor is divided over the nitrifying treatment (2) and the denitrifying treatment (3). This division is preferably discontinuous (see Figure 2) and the ratio is determined by the composition of the wastewater, especially by the concentration of the reduction equivalents and nitrogen. It is to be noted that it is also possible to use more than one reactor for both the nitrifying and the denitrifying step, either parallel or subsequent. After nitrification the separate streams are combined in the denitrification reactor through separated feeding lines in order to create the intended substrate gradient in the reactor. The separate inlet and the discontinuous division will realize the required discontinuous loaded substrate gradient which triggers and control the denitrifying ammonium oxidation. The denitrification process is appropriate for treatment of nitrogen (i.e. ammonium) containing wastewater which contains a too low concentration of electron donors for conventional denitrification (anaerobic treated yeast wastewater, leachate etc.).

For both the nitrifying and the denitrifying systems any conventional system can be applied:
1) activated sludge (SBR etc) and
2) trickling filter.

For the loading rate of the process of the invention the following values may apply:

| | | |
|---|---|---|
| Denitrification capacity: | 0.7 - 1.5 | kg NOₓ-N/m³.d |
| Anammox capacity | 0.5 - 1 | kg NH₄-N/m³.d |
| Total N-removal capacity | 1.2 - 2.5 | kg N/m³.d |

Based on the wastewater composition the required hydraulic retention can be calculated. The preferred technology for the denitrifying-reactor (DEAMOX-reactor) is UASB or EGSB. For start-up activated sludge from nitrifying / denitrifying treatment plant can be used. The reactor is generally filled nearly completely, unwanted sludge will be washed out and under denitrifying conditions granulating sludge will develop gradually. If no anaerobic pretreatment is used, for example in case of leachate, it can be seeded with a small fraction methanogenic sludge (10%). After start-up the system can be seeded with acclimatized denitrification-sludge.

The invention is now elucidated on by the following example, which is intended as elucidation and not as limitation.

### EXAMPLE

In a process set-up as described in fig 1, waste water having the following composition: total COD 4.53 g/l, COD after centrifugation 3.86 g/l and sulfate 135 mg S-SO₄/l, was fed to reactor (1) wherein an anaerobic treatment took place. The effluent of the anaerobic reactor had the following composition: total COD 1.2 g/l, COD after centrifugation 0.98 g/l, sulfate 0 mg S-SO₄/l and N-NH₄ 382 mg N/l. The hydraulic retention time in the anaerobic reactor was 1.17 h and the COD loading rate was 3.92 g COD ₜₒₜₐₗ/l/d.

50% of the said effluent was fed to the nitrification reactor (2) and the remaining 50% bypassed the said reactor (2) and was fed to denitrification reactor (3).

The effluent of the nitrification reactor (2) had the following composition: total COD 0.94 g/l, COD after centrifugation 0.78 g/l, sulfate 77 mg S-SO₄/l, N-NH₄ 31 mg N/l, N-NO₂ 5 mg N/l and N-NO₃ 194 mg/l, and was also fed to the denitrification reactor (3) The total flow through the anaerobic reactor and Deamox reactor was constant, however the actual distribution of the flow through the nitrifying system and the flow from the methane reactor direct to the Deamox reactor was discontinuous (see Fig. 2). In a cycle of 1 h during 30 minutes 95% of the flow was pumped direct into the Deamox reactor and 5 % flowed through the nitrifying system. For the next 30 minutes 100 % of the flow was directed into the nitrifying reactor and the direct flow was zero. As averaged result of this feeding pattern 47.5 % of the total flow passes direct from the methane reactor into the denitrifying Deamox reactor and 52.5 % flows through the nitrifying reactor into the Deamox reactor. The influent of the Deamox reactor (3) had the following composition: total COD 1.07 g/l COD after centrifugation 0.87 g/l, sulfate 39 mg S-SO₄/l, N-NH₄ 197 mg N/l, N-NO₂ 2 mg N/l and N-NO₃ 102 mg/l. The final effluent of reactor (3) had the composition: total COD 0.75 g/l COD after centrifugation 0.73 g/l, sulfate 62 mg S-SO₄/l, N-NH₄ 93 mg N/l, N-NO₂ 0 mg N/l and N-NO₃ 55 mg/l. From these data it can seen that in the Deamox reactor ammonium is removed with a concomitant removal of nitrate and nitrite. The Deamox reactor had a volume of 2.73 1 and the hydraulic retention time was about 1.2 day.

## Claims

1. Process for biological denitrification of waste water, comprising a nitrifying reactor and a denitrifying reactor, wherein an ammonium ion containing waste water stream is partly fed to the denitrifying reactor and partly to the nitrifying reactor, in which process the ammonium ion is at least partly biologically nitrified in the nitrifying reactor to nitrite and/or nitrate, which nitrified waste water flow is subsequently fed to the denitrifying reactor.

2. Process according to claim 1, wherein the feed to the nitrifying reactor is based on a feeding pattern with a discontinuous loaded substrate gradient.

3. Process according to claim 1 or 2, wherein the ammonium ion containing waste water stream originates from un upstream anaerobic treatment.

4. Process according to claim 1-3, wherein the feed to the nitrifying reactor amounts to 10 to 90, preferably 25 to 75 % of the total of the combined amount of the feed to the nitrifying and the denitrifying reactors.

5. Process according to claim 1-4, wherein in the nitrifying reactor 80 to 95 % of the ammonium is nitrified to nitrate.

6. Process according to claim 1-5, wherein the distribution of the said ammonium ion containing waste water stream between the nitrifying and the denitrifying reactor is determined by the composition of the wastewater, preferably by the concentration of the individual electron donors, such as sulfide, organic compounds and ammonium.

7. Process according to claim 1-6, wherein the reactors are based on systems using a biofilm in granules, such as. EGSB or UASB, or on a supporting matrix, such as filter or fluidized bed systems.
